# EUROPEAN PATENT APPLICATION

(11) **EP 4 016 771 A1**
(43) Date of publication of application: **22.06.2022**
(21) Application number: 20214688.2
(22) Date of filing: 16.12.2020
(51) Int. Cl.: H02G 3/08, H02G 3/12, H02G 3/14

(54) **ASSEMBLY OF AN INSTALLATION BOX AND ELECTRIC INSTALLATION MATERIAL**

(71) Applicant: ABB Schweiz AG, 5400 Baden (CH)
(72) Inventor: RENCKENS, Tom, 3742 ND BAARN (NL); WITTE, Ad, 3436 HT Nieuwegein (NL)
(74) Representative: van Trier, Norbertus Henricus Gerardus

(57) **Abstract**

The invention relates to an assembly of an installation box and electric installation material to be installed at the installation box, wherein the installation box comprises a bottom wall and a circumferential wall standing upright from the bottom wall, wherein the bottom wall and the circumferential wall together enclose an installation space, and the circumferential wall has an installation edge that bounds an installation opening of the installation box, characterized in that the electric installation material has a first coupler and the installation box has a second coupler, that the first and second couplers together define a one-way coupling allowing movement of the electric installation material in the installation direction and blocking movement of the electric installation material in a direction opposite to the installation direction, and that the second coupler is arranged at the inner circumference of the circumferential wall.

## Description

### BACKGROUND

The invention relates to an assembly of an installation box and electric installation material to be installed at the installation box.

An assembly comprising an installation box and a socket outlet is known to the skilled person. For example, an installation box is commercially available under the name ABB Hw150-F. The available installation box includes a bottom wall and a circumferential wall standing upright from the bottom wall, wherein the bottom wall and the circumferential wall together enclose an installation space, and the circumferential wall has an installation edge that bounds an installation opening of the installation box. The installation box further comprises two opposite elongated bushes which are receded into the installation spaced with respect to the circumferential wall. A securing screw is inserted into the upper side of each of the elongated bushes, wherein the securing screws are provided for securing the socket outlet to the installation box.

### SUMMARY OF THE INVENTION

A disadvantage of the known assembly of the installation box and the socket outlet is that after the installation box is installed in the wall, the socket outlet has to be secured to the installation box. The socket outlet has a metal mounting frame and a front secured to the metal mounting frame. In order to secure the socket outlet to the installation box, the metal mounting frame is secured to the installation box by securing screws which have to be inserted into securing slots of the mounting frame and into the upper sides of the elongated bushes, whereafter the front is secured to the mounting frame and the installation box by further securing screws. The securing screws have to be tightened by means of a screw driver. Securing the socket outlet to the installation box, therefore, is a troublesome and time-consuming task, for example, for the electrician.

It is an object of the present invention to ameliorate or to eliminate one or more disadvantages of the known assembly, to provide an improved assembly or to at least provide an alternative assembly.

According to a first aspect, the invention provides an assembly of an installation box and electric installation material to be installed at the installation box in an installation direction, wherein the installation box comprises a bottom wall and a circumferential wall standing upright from the bottom wall, wherein the bottom wall and the circumferential wall together enclose an installation space, and the circumferential wall has an installation edge that bounds an installation opening of the installation box, characterized in that the electric installation material has a first coupler and the installation box has a second coupler, that the first and second couplers together define a one-way coupling allowing movement of the electric installation material in the installation direction and blocking movement of the electric installation material in a direction opposite to the installation direction, and that the second coupler is arranged at the inner circumference of the circumferential wall.

During use of the assembly according to the invention, the electric installation material, such as a socket outlet, is electrically connected to the installation box, for example, by connecting electrical wires of the socket outlet to the installation box, in particular to electrical wires within the installation box. Thereafter, the installation box may be installed by placing the socket outlet at the installation box without coupling the first and second couplers to each other. Subsequently, a user may push the socket outlet towards the installation box until the socket outlet abuts against the installation edge of the installation box, or the wall in which the installation box is installed. Pushing the socket outlet towards the installation box, results in coupling the first and second couplers to each other, such that the complete socket outlet, i.e. the mounting frame and the front of the socket outlet, becomes coupled to the installation box. The socket outlet, thus, may be installed at the installation box by simply pushing it towards the installation box, which is advantageously a relatively simple act for a user and may be performed by hand.

Furthermore, since the second coupler is arranged at the inner circumference of the circumferential wall, the second coupler is located within the installation space of the installation box. This is advantageous, as the second coupler is arranged within the installation space available within the installation box, such that the installation box, in particular the outer circumference thereof, may substantially correspond to the known installation box, in particular the outer circumference thereof. Therefore, the known installation box may be easily replaced by the installation box according to the invention.

In an embodiment, the second coupler is arranged removably at the inner circumference of the circumferential wall at or near the installation edge. An advantage of this embodiment is that the second coupler may be easily accessible, even when the installation box is installed in a wall, and that the second coupler may be removed, for example, when it is necessary to de-install the electric installation material, such as the socket outlet, from the installation box.

In an embodiment, the installation box comprises an elongated bush receded into the installation space with respect to the circumferential wall, and extends substantially perpendicular to the bottom wall, wherein the upper side of the elongated bush is situated substantially within the installation plane, wherein the second coupler is arranged at or near the upper side of the elongated bush. In an embodiment thereof, a securing screw configured for securing electric installation material to the installation box is inserted into the upper side of the elongated bush, wherein the second coupler is secured to the elongated bush by means of the securing screw. According to this embodiment, the second coupler may be secured to the elongated bushes at the upper side thereof, which elongated bushes are present within the majority of the installation boxes. Advantageously, the second coupler may be secured to an existing installation box, therewith granting the existing installation box the advantages of the present invention.

In an embodiment, the second coupler comprises a securing base for securing the second coupler to the installation box, and a coupling portion connected resiliently to the securing base by means of a resilient connector and extending substantially perpendicular or transverse to the securing base, wherein the securing base, the resilient connector and the coupling portion define an insertion through-hole for receiving the first coupler. In an embodiment thereof, the coupling portion has a central part, a guiding part arranged at an upward facing side of the central part, and a coupling part arranged at a downward facing side of the central part. In an embodiment thereof, the coupling part is orientated at an acute angle with respect to the central part, wherein the coupling part is directed towards the inner circumference of the circumferential wall and is provided with a second array of teeth. The second coupler advantageously is enabled to guide the first coupler into the insertion through-hole by the guiding part, whereafter the coupling part is enabled to engage the first coupler in order to couple the first and second couplers to each other. Additionally, by arranging the coupling part at an acute angle with respect to the central part and directed towards the inner circumference of the circumferential wall, the coupling part is directed towards the first coupler, when inserted, such that coupling between the first and second couplers may be achieved by inserted the first coupler into the second coupler.

In an embodiment, legs are arranged at the securing base in order to form an inverted U-shaped coupler body, wherein each leg is provided with a hooking portion with a first hooking part connected to the respective leg and extending substantially parallel thereto, and a second hooking part connected to the first hooking part at an end facing away from the respective leg and extending substantially perpendicular thereto, wherein the second hooking parts are facing towards each other and are situated to limit the coupling portion from tilting in a direction away from the circumferential wall. The hooking parts prevent the coupling portion from tilting too far in the direction away from the circumferential wall, such that the resilient connector maintains its resilient properties.

In an embodiment, the electric installation material comprises a mounting frame for mounting the electric installation material to the installation box, wherein the mounting frame has a securing slot configured for enabling a user to secure the mounting frame to the installation box, wherein the first coupler is arranged adjacent to the securing slot. According to this embodiment, the mounting frame enables the user to secure the mounting frame to the installation box in a conventional manner, when for example the first coupler is damaged or when an installed installation box does not comprise a second coupler. Additionally, by arranging the first coupler adjacent to the securing slot, the mounting frame is secured to the installation box at substantially the same position as when the conventional securing screws and securing slots are used. Therefore, the user has no problem with positioning the first coupler correctly to the installation box in order to couple the mounting frame to the installation box.

In an embodiment, the first coupler comprises an elongated coupler body arranged at the mounting frame at the side facing the installation face and extending substantially perpendicular to the mounting frame, wherein the elongated coupler body is provided with a coupling element for coupling with the second coupler. In an embodiment thereof, the coupling element comprises a first array of teeth configured for being engaged by the second array of teeth of the second coupler. The first and second couplers may be based on a rack and pinion construction, and the inventors have surprisingly found that such rack and pinion construction results in a reliable coupling of the mounting frame to the installation box.

In an embodiment, the elongated coupler body has a first width and the insertion through-hole has a second width, wherein the second width is larger than the first width. According to this embodiment, the elongated coupler body is allowed to move within the insertion through-hole. This is advantageous, as this allows the electric installation material, such as the socket outlet, to be rotated slightly with respect to the installation box. This allows a user to place the socket outlet substantially horizontal, while the orientation of the socket outlet with respect to the installation box may be corrected.

In an embodiment, the mounting frame comprises one or more fixing members arranged at the side of the mounting frame facing the installation box and configured for fixing the mounting frame with respect to the installation box, when installed. In an embodiment thereof, each of the fixing members has a pair of fixing teeth made from a resilient material. When the mounting frame is installed at the installation box and, therewith, also at a side of a wall, the pair of fixing teeth is pushed against and, preferably, slightly into the wall. By the fixing teeth being slightly pushed into the wall, the mounting frame, and therewith the electric installation material, is prevented from moving and/or rotating on the wall in which the installation box is installed. Advantageously, the mounting frame maintains its position/orientation in which it is installed, with respect to the installation box.

In an embodiment, the electric installation material is selected from the group comprising a socket outlet, a light switch and a dimmer.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B show an isometric view and a cross-sectional view, respectively, of an assembly of an installation box and electric installation material according to an embodiment of the invention;
Figure 2 shows an isometric view of the installation box with second couplers of figure 1A;
Figure 3A shows an exploded view of the electric installation material of figure 1 having a mounting frame;
Figure 3B shows an isometric view of the mounting frame of figure 3A;
Figure 3C shows a side view of the mounting frame of figure 3B; and
Figure 4 shows an isometric view of a second coupler of figure 2.

### DETAILED DESCRIPTION OF THE INVENTION

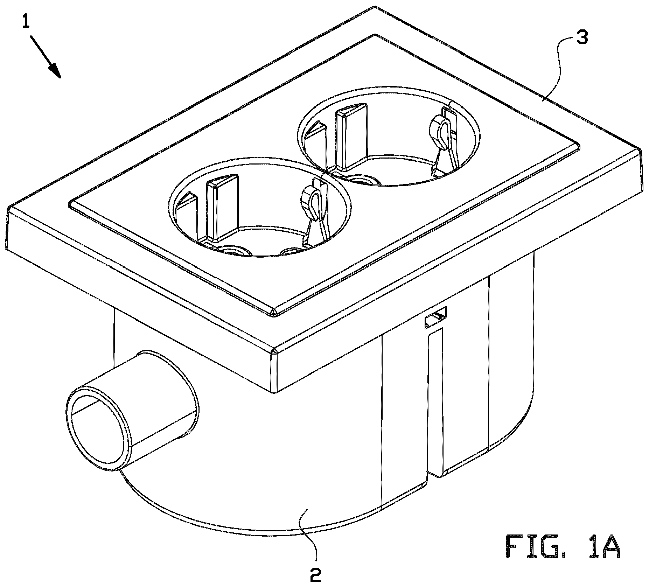

An assembly 1 of an installation box 2 and electric installation material, in this case a socket outlet 3, is shown in Figure 1A. The assembly 1 is configured to be installed, for example, at a non-shown wall such as a wall made from gypsum or sand-lime bricks, wherein the installation box 2 is configured to be installed in a hole in the wall, and the socket outlet 3 is configured to be installed at a front side of the wall, i.e. the side of the wall visible to persons passing by.

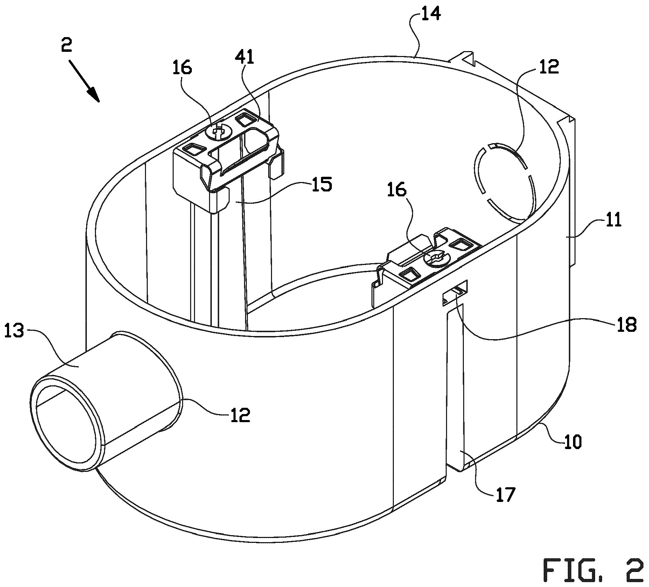

As shown in figure 2, the installation box 2 has a bottom wall 10 and a circumferential wall 11 standing upright from the bottom wall 10. An installation space is enclosed by the bottom wall 10 and the circumferential wall 11, into which electrical wires may be inserted. The circumferential wall 11 is provided with a wire opening 12 and a sprout 13 attached to the circumferential wall 11 and aligned with the wire opening 12 such that one or more electrical wires may pass through the sprout 13 and the wire opening 12 into the installation space. At the end of the circumferential wall 11 facing away from the bottom wall 10, the circumferential wall 11 has an installation edge 14 bounding an installation opening of the installation box 2, wherein the installation opening provides access to the installation space of the installation box 2.

The installation box 2 further is provided with two opposite elongated bushes 15 which are receded into the installation space with respect to the circumferential wall 11. The elongated bushes 15 extend substantially perpendicular to the bottom wall 10, and the upper side of each of the elongated bushes 15 is situated substantially within the installation plane defined by the installation edge 14. The bush bases of each of the elongated bushes 15 extending into the longitudinal direction thereof merge into the circumferential wall 11 and the lower side of each of the elongated bushes 15 merges into the bottom wall 10. A securing screw 16 is inserted into upper side of each of the elongated bushes 15, which securing screw 16 extends into an elongated bush channel 17 defined by the respective elongated bushing 15. A non-shown securing nut is provided above each elongated bush channel 17 within a small opening 18 just below the installation edge 14, in order to fixate the securing screw 16 with respect to the respective elongated bush 15.

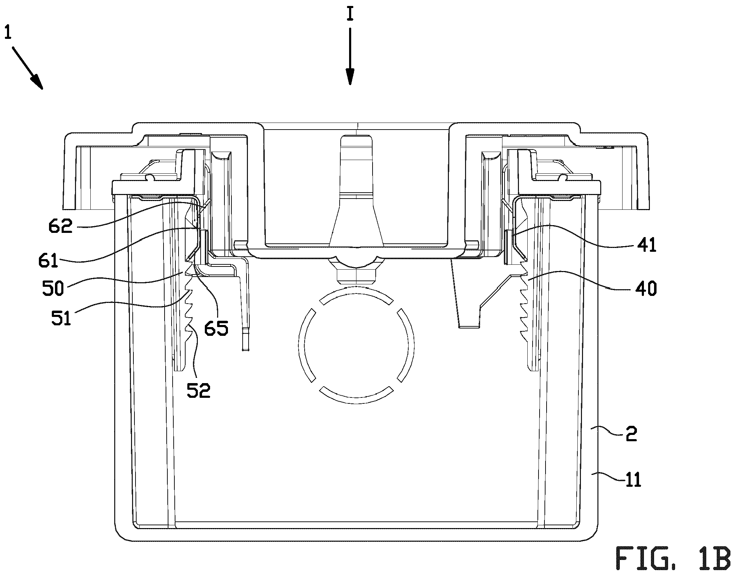

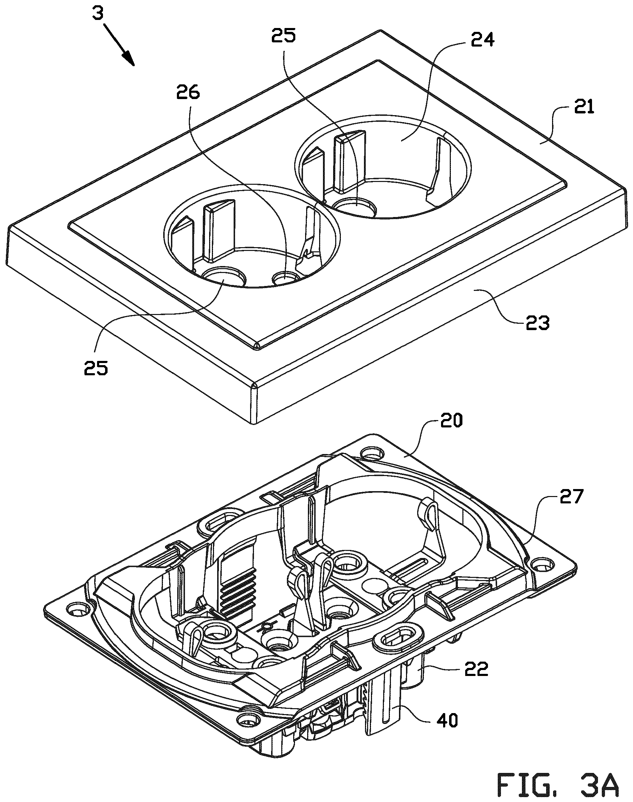

An exploded view of the socket outlet 3 of figure 1 is shown in figure 3A. The socket outlet 3 has a mounting frame 20 for mounting the socket outlet 3 to the installation box 2, a front plate 21 configured to be arranged at the front of the mounting frame 20, and a socket portion 22 arranged at the mounting frame 20 and configured for receiving an electric plug partially and for being connected to electrical wires. The front plate 21 has a front plate body 23 with two plug recesses 24 for receiving a part of the electric plug. Each of the plug recesses 24 is provided with two pin through-holes 25 for allowing plug pins of the electrical plug to pass through the front plate body 23 in order to be inserted into the socket portion 22. Furthermore, each of the plug recesses 24 is provided with a securing through-hole 26 in order to allow the front plate 21 to be secured to the socket portion 22.

The socket portion 22 is well-known to the skilled person in the technical field of the present application.

The mounting frame 20 has an elongated mounting frame body 27, which is slightly elastic, with an elliptical opening 28 provided in the center thereof. The elliptical opening 28 is bounded by an opening edge 29 which is part of the elongated mounting frame body 27. The mounting frame body 27 is further provided with a connecting through-hole 30 configured for receiving a non-shown connector, such as a screw, for connecting the mounting frame 20 to a component situated behind the mounting frame 20. The mounting frame 20, additionally, comprises elliptical securing slots 31 situated at opposite sides of the elliptical opening 28 within the mounting frame body 27. Each of the securing slots 31 is provided with an reinforcing rib 32 extending around the respective securing slot 31 in order to provide a local reinforcement of the mounting frame 20. The securing slots 31 are configured for receiving at least a part of the securing screws 16.

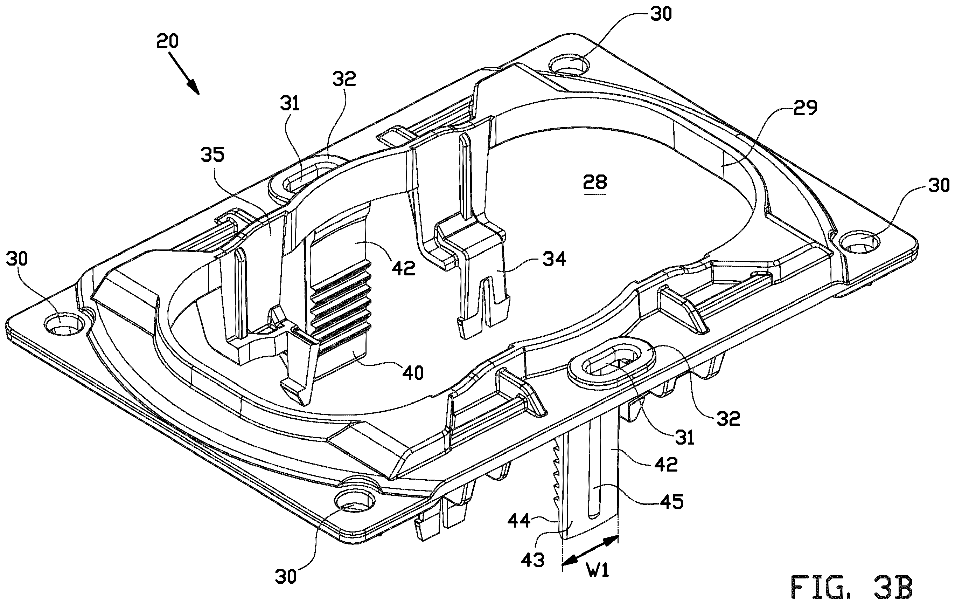

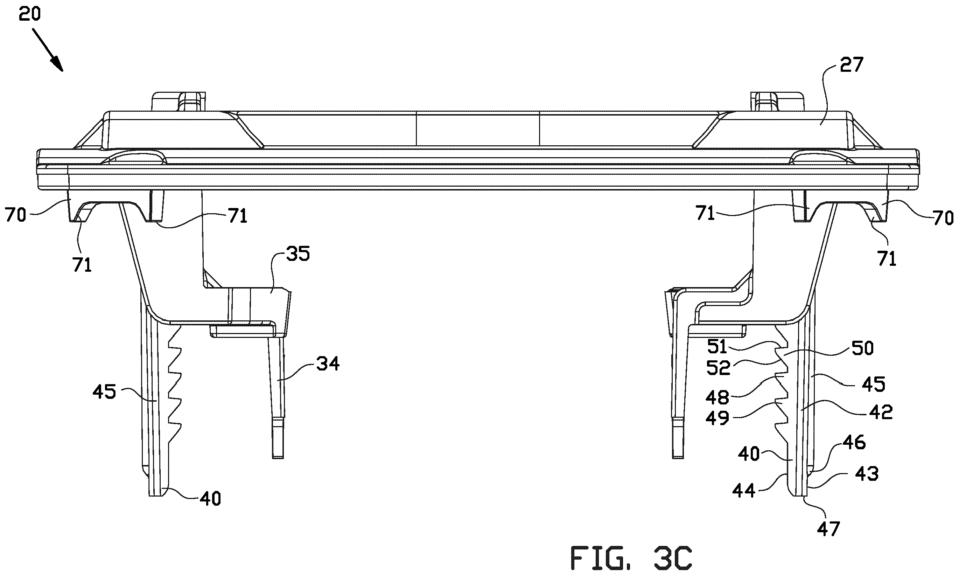

As shown in figures 3B and 3C, the mounting frame 20 is further provided with a first socket connector 34 and a second socket connector 35 at opposite sides, in particular the longitudinal sides, of the elliptical opening 28. The first and second socket connectors 34, 35 extend downwardly from the opening edge 29 and are configured for allowing the socket portion 22 to be connected to the mounting frame 20. As a result, the mounting frame 20 and the socket portion 22 may be installed at once at the installation box 2.

During installation of the assembly 1 of the installation box 2 and the socket outlet 3, the installation box 1 is usually installed in the hole within the wall. Subsequently, the socket outlet 3 has to be coupled to the installation box 2. In order to couple the installation box 2 and the socket outlet 3 to each other, the socket outlet 3 is provided with first couplers 40 and the installation box 2 is provided with second couplers 41.

As shown in figure 3B, each of the first couplers 40 has an elongated coupler body 42 with a first width W1, which is arranged at the bottom side of the mounting frame 20, *i.e.* the side of the mounting frame 20 facing towards the installation space within the installation box 2 when installed at the installation box 2. Each of the elongated coupler bodies 42 is arranged adjacent to the securing slot 31 of the mounting frame 20. The elongated coupler body 42 has a first body side 43 facing towards the inner circumference of the circumferential wall 11, when installed, and a second body side 44, opposite to the first body side 43, facing the installation space of the installation box 2. At the first body side 43, the elongated coupler body 42 is provided with an abutting rib 45 extending along the longitudinal direction of the elongated coupler body 42. The lower rib end 46, which is rounded, is located, preferably slightly, above the lower body end 47 of the elongated coupler body 42.

As shown in figure 3C, the elongated coupler body 42 is provided with a coupling element 48 comprising a first array 49 of teeth. Each tooth 50 of the first array 49 of teeth is substantially triangular shaped and has a first flank 51, substantially perpendicular to the longitudinal direction of the elongated coupler body 42, and a second flank 52, following on the first flank 51 in a direction away from the mounting frame 20 and orientated at an acute angle with respect to the longitudinal direction of the elongated coupler body 42.

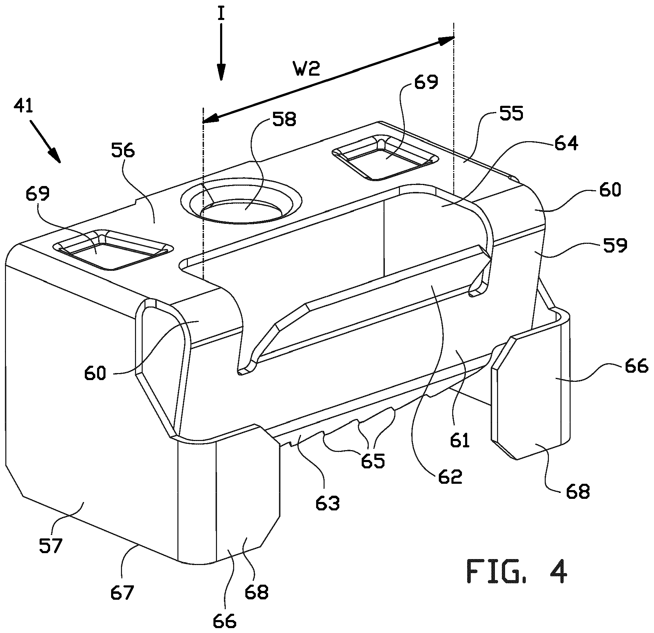

An isometric view of a second coupler 41 is shown in figure 4. The second coupler 41 has an inverted U-shaped coupler body 55, preferably made from metal, with a securing base 56 and two legs 57 arranged at the securing base and extending substantially downwards therefrom and substantially perpendicular thereto. The securing base 56 has a securing opening 58 configured for receiving a part of the securing screw 16, such that the second coupler 41 may be secured to one of the elongated bushes 15 at the inner circumference of the circumferential wall 11. Furthermore, the securing base 56 is provided with a base indentation 69 at both sides of the securing opening 58. The second coupler 41 further comprises a coupling portion 59 connected resiliently to the securing base 56 by means of resilient connectors 60 and extending substantially perpendicular, or alternatively transverse or at an acute angle, to the securing base 56. The coupling portion 59 has a central part 61, a guiding part 62 arranged at an upward facing side of the central part 61, and a coupling part 63 arranged at a downward facing side of the central part 61.

As shown in figure 4, the guiding part 62 is inclined with respect to the central part 61, *i.e.* orientated at an acute angle with respect to the central part 61, wherein the guiding part 62 is directed in a direction away from the securing base 56, and/or away from the inner circumference of the circumferential wall 11. The guiding part 62, the connectors 60, and the securing base 56 together define an insertion through-hole 64 through which the first coupler 40, in particular the elongated coupler body 42 thereof, may be inserted into the installation space of the installation box 2. The insertion through-hole 64 has a second width W2 in a direction substantially parallel to the width direction of the securing base 56, i.e. the direction extending between the two legs 57 of the inverted U-shaped coupler body 55. The second width W2 is larger than the first width W1 of the elongated coupler body 42, such that the elongated coupler body 42 may be placed loosely within the insertion through-hole 64. During inserting the elongated coupler body 42 into the insertion through-hole 64, the lower body end 47 of the elongated coupler body 42 may come into contact with the guiding part 62 such that the guiding part 62 may guide the elongated coupler body 42 into the insertion through-hole 64.

As best shown in figure 4, the coupling part 63 is orientated at an acute angle with respect to the central part 61, wherein the coupling part 63 is directed towards the inner circumference of the circumferential wall 11. The coupling part 63 is provided with a second array 65 of teeth. As best shown in figure 1B, the acute angle between the coupling part 63 and the central part 61 substantially corresponds to the acute angle between the acute angle between the second flank 52 to the longitudinal direction of the elongated coupler body 42, such that the coupling part 63 may abut against the second flank 52 of one of the teeth 50 or such that the coupling portion 59 is tilted in a direction away from the circumferential wall 11 during inserting the first coupler 40 into the second coupler 41 in an installation direction I due to the coupling portion 59 being resiliently connected to the securing base 56. The first flank 51 of one of the teeth 50 prevents the first coupler 40 from moving the first coupler 40 in a direction opposite to the installation direction I. The first and second couplers 40, 41, therefore, form an one-way coupling.

As shown in figure 4, each of the legs 57 of the inverted U-shaped coupler body 55 is provided with a hooking portion 66. Each hooking portion 66 has a first hooking part 67 connected to the respective leg 57 and extending substantially parallel thereto, and a second hooking part 68 connected to the first hooking part 67 at an end facing away from the respective leg 57 and extending substantially perpendicular thereto. The second hooking parts 68 are facing towards each other and are situated to limit the coupling portion 59 from tilting in a direction away from the circumferential wall 11.

In order to prevent the socket outlet 3 from moving with respect to the wall, when installed, the mounting frame 20 is provided with removable fixing members 70 arranged at each of the connecting through-holes 30 of the mounting frame 20, as shown in figure 3C. Each fixing member 70 has a pair of fixing teeth 71 made from a resilient material, such as plastic, and configured for being pushed against the wall. The fixing teeth 71 have such small dimensions, that they are pushed slightly into the wall, when pushed against the wall. As a result, socket outlet 3, in particular the mounting frame 20, is prevented from moving and/or rotating on the wall, and/or the mounting frame 20 is kept against the wall.

As mentioned above, the mounting frame 20 is slightly elastic. When the socket outlet 3 is placed against the wall, the first and second couplings 40, 41 are coupled to each other, such that the socket outlet 3 is prevented from being removed from the installation box 2. The coupling parts 63 of the second couplers 41 are brought into engagement with an initial one of the teeth 50 of the first couplers 40. Subsequently, the socket outlet 3 and thus the mounting frame 20 may be pushed in slightly further, such that the first couplers 40 are moved a little bit further into the installation space. By moving the first couplers 40 further into the installation space, the coupling part 63 of the second couplers 41 may be brought into engagement with a following tooth 50 of the first couplers 40, which in particular is placed above the initial one of the teeth 50 of the first couplers 40. As a result, the coupling between the first and second couplers 40, 41 is slightly under tension, therewith forcing the socket outlet 3 and also the fixing teeth 71 at the mounting frame 20 against the wall.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Assembly (1) of an installation box (2) and electric installation material (3) to be installed at the installation box (2) in an installation direction, wherein the installation box (2) comprises a bottom wall (10) and a circumferential wall (11) standing upright from the bottom wall (10), wherein the bottom wall (10) and the circumferential wall (11) together enclose an installation space, and the circumferential wall (11) has an installation edge (14) that bounds an installation opening of the installation box (2), **characterized in that** the electric installation material (3) has a first coupler (40) and the installation box (2) has a second coupler (41), that the first and second couplers (40, 41) together define a one-way coupling allowing movement of the electric installation material (3) in the installation direction and blocking movement of the electric installation material (3) in a direction opposite to the installation direction, and that the second coupler (41) is arranged at the inner circumference of the circumferential wall (11).

2. Assembly (1) according to claim 1, wherein the second coupler (41) is arranged removably at the inner circumference of the circumferential wall (11) at or near the installation edge (14).

3. Assembly (1) according to claim 1 or 2, wherein the installation box (2) comprises an elongated bush (15) receded into the installation space with respect to the circumferential wall (11), and extends substantially perpendicular to the bottom wall (10), wherein the upper side of the elongated bush (15) is situated substantially within the installation plane, wherein the second coupler (41) is arranged at or near the upper side of the elongated bush (15) .

4. Assembly (1) according to claim 3, wherein a securing screw (16) configured for securing electric installation material to the installation box (2) is inserted into the upper side of the elongated bush (15), wherein the second coupler (41) is secured to the elongated bush (15) by means of the securing screw (16).

5. Assembly (1) according to any one of the preceding claims, wherein the second coupler (41) comprises a securing base (56) for securing the second coupler (41) to the installation box (2), and a coupling portion (59) connected resiliently to the securing base (56) by means of a resilient connector (60) and extending substantially perpendicular or transverse to the securing base (56), wherein the securing base (56), the resilient connector (60) and the coupling portion (59) define an insertion through-hole (64) for receiving the first coupler (40).

6. Assembly (1) according to claim 5, wherein the coupling portion (59) has a central part (61), a guiding part (62) arranged at an upward facing side of the central part (61), and a coupling part (63) arranged at a downward facing side of the central part (61).

7. Assembly according to claim 6, wherein the coupling part (63) is orientated at an acute angle with respect to the central part (61), wherein the coupling part (63) is directed towards the inner circumference of the circumferential wall (11) and is provided with a second array (65) of teeth.

8. Assembly according to any one of the claims 5-7, wherein legs (57) are arranged at the securing base (56) in order to form an inverted U-shaped coupler body (55), wherein each leg (57) is provided with a hooking portion (66) with a first hooking part (67) connected to the respective leg (57) and extending substantially parallel thereto, and a second hooking part (68) connected to the first hooking part (67) at an end facing away from the respective leg (57) and extending substantially perpendicular thereto, wherein the second hooking parts (68) are facing towards each other and are situated to limit the coupling portion (59) from tilting in a direction away from the circumferential wall (11).

9. Assembly (1) according to any one of the preceding claims, wherein the electric installation material (3) comprises a mounting frame (20) for mounting the electric installation material (3) to the installation box (2), wherein the mounting frame (20) has a securing slot (31) configured for enabling a user to secure the mounting frame (20) to the installation box (2), wherein the first coupler (40) is arranged adjacent to the securing slot (31).

10. Assembly (1) according to claim 9, wherein the first coupler (40) comprises an elongated coupler body (42) arranged at the mounting frame (20) at the side facing the installation face and extending substantially perpendicular to the mounting frame (20), wherein the elongated coupler body (42) is provided with a coupling element (48) for coupling with the second coupler (41).

11. Assembly according to claim 7 and 10, wherein the coupling element (48) comprises a first array (49) of teeth configured for being engaged by the second array (65) of teeth of the second coupler (41).

12. Assembly according to claim 5 and one of claims 10 or 11, wherein the elongated coupler body (42) has a first width (W1) and the insertion through-hole (64) has a second width (W2), wherein the second width (W2) is larger than the first width (W1).

13. Assembly (1) according to any one of the claims 9-12, wherein the mounting frame (20) comprises one or more fixing members (70) arranged at the side of the mounting frame (20) facing the installation box (2) and configured for fixing the mounting frame (20) with respect to the installation box (2), when installed.

14. Assembly (1) according to claim 13, wherein each of the fixing members (70) has a pair (71) of fixing teeth made from a resilient material.

15. Assembly according to any one of the preceding claims, wherein the electric installation material is selected from the group comprising a socket outlet, a light switch and a dimmer.
